# EUROPEAN PATENT APPLICATION

(11) **EP 4 660 138 A1**
(43) Date of publication of application: **10.12.2025**
(21) Application number: 24180534.0
(22) Date of filing: 06.06.2024
(51) Int. Cl.: C01D 3/04, C01D 7/18, C01F 11/46

(54) **RECYCLING OF THE NACL SOLUTION FROM THE "GYPSUM WORKSHOP" TO DISSOLVE THE NA2SO4**

(71) Applicant: Solvay SA, 1120 Brussels (BE)
(72) Inventor: LEVEQUE, Emmanuel, 54110 Dombasle-Sur-Meurthe (FR); HORBEZ, Dominique, 93308 Aubervilliers (FR); NETO, Jérémy, 54110 Dombasle-Sur-Meurthe (FR)
(74) Representative: Kraus & Lederer PartGmbB

(57) **Abstract**

The present invention relates to a process to manufacture calcium sulfate comprising at least the following steps: (a) reacting a solution containing calcium chloride and sodium chloride with sodium sulfate and obtaining calcium sulfate; (b) precipitating and separating of the calcium sulfate obtained in step a) and generating a liquid containing the sodium chloride; (c) separating the liquid containing the sodium chloride from step b); and (d) using at least partly the liquid containing sodium chloride from step c) to dissolve the sodium sulfate before it is entered in the step a).

## Description

The present invention relates to a process to manufacture calcium sulfate and the use of sodium sulfate either as anhydrous sodium sulfate or decahydrate sodium sulfate.

Sodium carbonate (soda ash) is the neutral sodium salt of carbonic acid. It is one of the most important raw materials used in the chemical industry. Its sodium content results in fluxing properties that make it important in the glass and silicate industries. In addition, it is used to neutralize inorganic and organic acids or acidic salts, and to maintain a constant pH in processes where acids are liberated. It is also utilized in the production of sodium salts (e.g., phosphates, nitrates, chromates, citrates, tartrates, salts of fatty acids), and can be used in aqueous solution to remove sulfur dioxide from process gas or off-gases.

In addition to anhydrous sodium carbonate, Na₂CO₃, the following hydrates exist: sodium carbonate monohydrate, Na₂CO₃·H₂O; sodium carbonate heptahydrate, Na₂CO₃·7H₂O; and sodium carbonate decahydrate, Na₂CO₃·10H₂O.

Sodium carbonate is commonly prepared by the ammonia soda process, also called ammonia process or Solvay process. In this process, a residual liquor, called effluent herein, is obtained, which is an aqueous solution of calcium chloride and of sodium chloride, containing various substances in suspension (especially calcium sulfate, calcium carbonate, magnesium hydroxide, iron oxides and silica). Thus, calcium chloride and sodium chloride are obtained as by-products of the ammonia process. Usually, these by-products are disposed of from the production plant. The liquor is often clarified in large settling basins or ponds. However, mud with a high chloride content is produced, which may presents disposal problems. Therefore, the end liquor is frequently diluted with used cooling water and discharged directly into the receiving water body, e.g. discharged into a river or to the sea. However, both from an ecological and economical point of view, it would be advantageous to use these by-products as starting materials for further processes instead of discharging them into a river.

Removal of sodium chloride from the end liquor is carried out in only a few sodium carbonate plants. It can be used to produce calcium chloride.

Another important raw material is calcium sulfate, commonly known as gypsum, which plays a pivotal role across various industries due to its versatile properties. Its significance stems from its widespread applications in construction, agriculture, food and beverage, pharmaceuticals, and environmental remediation. Nowadays, gypsum is only occasionally extracted from mines. Rather, gypsum is produced as a by-product in chemical industry. For instance, it can be produced by reacting sodium sulfate with calcium chloride.

Sodium sulfate is obtained for instance by reacting combustion gases containing sulphur oxide with sodium carbonate or sodium bicarbonate to remove sulfur dioxide from these gases. According to EP-A-0 005 301, the gas to be purified is treated with sodium (bi)carbonate to form sodium sulphite and sodium sulfate, which is dissolved in water and the resulting aqueous solution is treated with calcium chloride to precipitate calcium sulfate dihydrate, which is recovered. The calcium sulfate dihydrate obtained in this way is used in the construction industry or discarded.

EP 0 366 182 B1 describes a process for removing an industrial residue containing sodium sulfate, according to which the sodium sulfate in the residue is treated with calcium chloride to precipitate calcium sulfate, the calcium sulfate is sent to a rock salt deposit, and an aqueous solution of sodium chloride is simultaneously withdrawn from the deposit. In an embodiment of this process, the calcium chloride originates from the calcium hydroxide treatment of the sodium bicarbonate mother liquor in the ammonia-soda process, and the treatment of sodium sulfate with calcium chloride may be carried out by mixing with sodium sulfate a residual liquor from a column for distilling the mother liquor from the manufacture of sodium bicarbonate by the ammonia process. The aqueous sodium chloride solution withdrawn from the deposit is sent back to the soda unit.

The ammonia soda process is the predominant process used for the production of sodium carbonate. It is described in detail in the literature, e.g. Ullmann's Encyclopedia of Industrial Chemistry, 2012, Wiley-VCH, Vol. 33, Sodium Carbonates, pages 299-317, and in its most common form includes the following steps:
1. Production of a saturated salt solution

   NaCl + H₂O
2. Burning of limestone or chalk (the CO₂ liberated is used in stage 4)

   CaCO₃ → CaO + CO₂
3. Saturation of the salt solution with ammonia

   NaCl + H₂O NH₃
4. Precipitation of crude bicarbonate by the introduction of carbon dioxide (from stages 2 and 6)

   NaCl + H₂O + NH₃ + CO₂ → NH₄Cl + NaHCO₃
5. Filtering and washing of precipitated bicarbonate
6. Thermal decomposition of bicarbonate to sodium carbonate (the CO₂ evolved is recycled to stage 4)

   2 NaHCO₃ → Na₂CO₃ + H₂O + CO₂
7. Production of milk of lime

   CaO + H₂O → Ca(OH)₂
8. Recovery of ammonia by distillation of the mother liquor from stage 4 (bicarbonate precipitation) with milk of lime (the ammonia liberated is recycled to stage 3)

   2 NH₄Cl + Ca(OH)₂ → 2 NH₃ + CaCl₂ + 2 H₂O
9. Optional production of refined sodium bicarbonate (sodium hydrogencarbonate). This is generally operated starting with an aqueous solution of sodium carbonate which is obtained either by dissolving sodium carbonate from step 6, or by decomposing crude bicarbonate with steam. This is then optionnally filtered, and then carbonated with a gas comprising CO₂, and the refined sodium bicarbonate is then filtered and dried:

   Na₂CO₃ + H₂O + CO₂ → 2 NaHCO₃

In addition, various modifications of the ammonia soda process are known, for instance by employing alternative methods of ammonia recovery.

The present disclosure is not limited to any specific form of the ammonia soda process, as long as an effluent containing calcium chloride and sodium chloride is obtained by the process. For instance, several variations of the process are described in Ullmann's Encyclopedia of Industrial Chemistry, 2012, Wiley-VCH, Vol. 33, Sodium Carbonates, pages 299-317.

In summary, the process can be represented by the following simplified equation:

2 NaCl + CaCO₃ → Na₂CO₃ + CaCl₂

And for sodium bicarbonate production (as either crude or refined sodium bicarbonate):

NaCl + 0.5 CaCO₃ + 0.5 H₂O + 0.5 CO₂ → NaHCO₃ + 0.5 CaCl₂

However, in general, the effluent also contains some NaCl resulting from incomplete reaction, such that as final products, sodium carbonate and an effluent containing calcium chloride and sodium chloride are obtained. For instance, the effluent can contain 120 - 180 g/L CaCl₂ and 50 - 75 g/L NaCl.

### SUMMARY OF THE INVENTION

The present invention relates to a process to manufacture calcium sulfate comprising at least the following steps:
a) reacting a solution containing calcium chloride and sodium chloride with sodium sulfate and obtaining calcium sulfate,
b) precipitating and separating of the calcium sulfate obtained in step a) and generating a liquid containing the sodium chloride,
c) separating the liquid containing the sodium chloride from step b), and
d) using at least partly the liquid containing sodium chloride from step c) to dissolve the sodium sulfate before it is entered in the step a).

### DETAILED DESCRIPTION OF THE INVENTION

Before the inventive process of the invention will be described in detail, it is to be understood that this invention is not limited to specific process conditions described herein, since such conditions may, of course, vary.

It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise. By way of example, "a compound" means one compound or more than one compound.

The terms "containing", "contains" and "contained of" as used herein are synonymous with "including", "includes" or " comprising", "comprises", and are inclusive or open-ended and do not exclude additional, non-recited members, elements or process steps. It will be appreciated that the terms "containing", "contains", "comprising", "comprises" and "comprised of" as used herein comprise the terms "consisting of", "consisting essentially of ", "consists" and "consists of".

Throughout this application, the term "about" is used to indicate that a value includes the standard deviation of error for the device or method being employed to determine the value.

As used herein, the term "average" refers to number average unless indicated otherwise.

As used herein, the terms "% by weight", "wt.-%", "wt%", "weight percentage", or "percentage by weight" are used interchangeably. The same applies to the terms "% by volume", "vol.- %", "vol. percentage", or "percentage by volume", or "% by mol", "mol- %", "mol percentage", or "percentage by mol".

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different alternatives, embodiments and variants of the invention are defined in more detail. Each alternative and embodiment so defined may be combined with any other alternative and embodiment, and this for each variant unless clearly indicated to the contrary or clearly incompatible when the value range of a same parameter is disjoined. In particular, any feature indicated as being preferred or advantageous may be combined with any other feature or features indicated as being preferred or advantageous.

Furthermore, the particular features, structures or characteristics described in present description may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and from different embodiments, as would be understood by those in the art.

Should the disclosure of any patents, patent applications, and publications which are incorporated herein by reference conflict with the description of the present application to the extent that it may render a term unclear, the present description shall take precedence.

The term "solution", as used herein, refers preferably to a homogeneous mixture composed of two or more substances. In a solution, one substance, called the solute, is dispersed uniformly throughout another substance, called the solvent. The solute may be a solid, liquid, or gas, and the solvent is typically a liquid, although it can also be a gas or solid. Solutions can vary in concentration, with dilute solutions containing relatively low amounts of solute compared to the solvent, while concentrated solutions have higher amounts of solute.

The term "precipitating" and "precipitation" can be used interchangeably.

The terms refer to the formation of a solid from a solution during a chemical reaction or physical change. This solid, called a precipitate, forms when the solubility limit of a substance in a solvent is exceeded, leading to the formation of solid particles that separate from the solution. Precipitation reactions typically occur when two solutions are mixed, resulting in the formation of an insoluble compound, or when a solute undergoes a chemical reaction that produces an insoluble product. Precipitation reactions are commonly used in laboratory settings for qualitative analysis and in industrial processes such as wastewater treatment and mineral extraction.

The term "separating" and "separation" can be used interchangeably.

The terms preferably refer to the process of isolating or removing one or more components from a mixture to obtain purified substances. Separation techniques exploit differences in physical or chemical properties such as size, solubility, density, volatility, or magnetic susceptibility to achieve this goal. Common separation methods include filtration, distillation, chromatography, centrifugation, and evaporation. These techniques are fundamental in various fields of chemistry, including analytical chemistry, environmental chemistry, and industrial chemistry, where the isolation of specific compounds or purification of substances is necessary for further analysis or use.

The term "dissolving" and "dissolve" can be used interchangeably. The terms preferably refer to the process in which a solute disperses uniformly throughout a solvent to form a homogeneous mixture called a solution. This process occurs at the molecular level, where the solute particles (atoms, ions, or molecules) become surrounded by solvent particles due to attractive forces between them. Dissolving typically involves the breaking of intermolecular or intramolecular bonds in the solute and solvent and the formation of new bonds between solute and solvent particles. Dissolving can occur in various solvents, such as water, organic solvents, or gases, depending on the nature of the solute and solvent. This process is essential in many chemical and biological processes, including dissolution of medications in the bloodstream, dissolution of pollutants in water, and dissolution of minerals in geological processes.

The term "reacting" and "reaction" can be used interchangeably. The terms refer preferably to the process where two or more substances, known as reactants, undergo chemical changes to form one or more different substances, called products. This process involves the breaking and forming of chemical bonds between atoms in the reactants, leading to the rearrangement of atoms to produce new substances. Chemical reactions can be classified into various types based on factors such as the nature of the reactants and products, the energy changes involved, and the rate at which they occur.

All indications of concentrations, typically given as g/L, refer to standard conditions.

The term "electrochemical process" is understood to mean a process of using an electric field or an electric current to drive a non-spontaneous chemical reaction or a chemical separation. In the context of the present invention, it includes all electrochemical processes which produce sodium carbonate and/or sodium bicarbonate, and an effluent containing calcium chloride using calcium carbonate and sodium chloride as starting materials. Preferred examples are electrolysis and electrodialysis of sodium chloride, preferably electrolysis or electrodialysis of an aqueous sodium chloride solution, yielding sodium hydroxide and a chlorine derivative. The obtained sodium hydroxide, preferably the obtained aqueous sodium hydroxide solution, is submitted to a carbonation reaction to produce sodium carbonate. Preferably, the chlorine derivative is hydrochloric acid. Suitable carbonating agents are for instance an aqueous solution of NaHCO₃, CO₂ gas or mixtures thereof, preferably CO₂ gas. The obtained chlorine derivative is reacted with calcium carbonate to generate calcium chloride. The chlorine derivative can be reacted with calcium carbonate alone or with a mixture comprising calcium carbonate, e.g. a mixture of calcium carbonate and calcium oxide.

Other advantageous examples are electrolysis and electrodialysis of solutions comprising ammonium chloride (NH₄Cl) for regenerating ammonia (NH₃) and to produce a chlorine derivative, such as: chlorine (Cl₂), monochloramine (NH₂Cl) or dichloroamine (HCl₂), or hydrochloric acid (HCl), and using said regenerated ammonia for producing sodium carbonate or sodium bicarbonate in an ammonia soda process. When hydrochloric acid is produced, it can be advantageously used to generate CO₂ by acid attack from limestone (CaCO₃) with a coproduction of calcium chloride (CaCl₂).

Example for electrolysis: Electrolysis of sodium chloride to sodium hydroxide (NaOH) and a chlorine derivative, wherein the chlorine derivatives may be for instance chlorine gas (Cl₂), hydrochloric acid (HCl) or sodium hypochlorite (NaHClO). An example of such process is described in WO 2008/031834 A1. An example of the electrolysis of ammonium chloride is described in US 2,209,681.

Example for electrodialysis: Electrodialysis of NaCl to produce sodium hydroxide and hydrochloric acid or associated derivatives. An example of such process is described in US 4,219,396.

Thus, sodium carbonate production by an electrochemical process using sodium chloride includes generally the electrochemical conversion of sodium chloride (typically an aqueous sodium chloride solution) to sodium hydroxide (typically an aqueous sodium hydroxide solution) and a chlorine derivative; the subsequent carbonation of sodium hydroxide to sodium carbonate; and the conversion of the chlorine derivative to calcium chloride by reaction with calcium carbonate.

"Electrodialysis" is a process where an electric field is applied to a solution, and the solution is passed through cation-selective and/or anion-selective membranes, and/or bipolar membranes, are generally placed in series repeating a specific unitary configuration. When the electric current is applied, cations migrate towards the cathode and may pass through the cation-selective membranes, while anions migrate towards the anode through possibly the anion-selective membranes. Thus, ions can selectively be removed from the solution or undergo chemical reactions.

"Electrolysis" is a process where an electric current is passed through a solution, causing the solutes to break down into their constituent elements or ions, which migrate towards the oppositely charged electrodes, where they can undergo chemical reactions. This involves passing an electric current through an electrolyte, causing chemical reactions to occur at the electrodes.

The present invention relates to a process to manufacture calcium sulfate comprising at least the following steps:
a) reacting a solution containing calcium chloride and sodium chloride with sodium sulfate and obtaining calcium sulfate,
b) precipitating and separating of the calcium sulfate obtained in step a) and generating a liquid containing the sodium chloride,
c) separating the liquid containing the sodium chloride from step b), and
d) using at least partly the liquid containing sodium chloride from step c) to dissolve the sodium sulfate before it is entered in the step a).

Preferably, the steps are carried out in a sequence of a) to d).

In step b) the separating of the calcium sulfate obtained in step a) and generating a liquid containing the sodium chloride, can be preferably carried out by the use of a filter, a decanter, or a centrifuge, for separating insoluble matter by filtration, decantation, or centrifugation for obtaining:
- a separated insoluble matter, and
- a second aqueous solution.

As already outlined above, sodium sulfate can be obtained from different sources. Sodium sulfate can be obtained for instance by reacting combustion gases containing sulphur oxide with sodium carbonate or sodium bicarbonate to remove sulfur dioxide from these gases. According to EP-A-0 005 301, the gas to be purified is treated with sodium (bi)carbonate to form sodium sulphite and sodium sulfate, which is dissolved in water and the resulting aqueous solution is treated with calcium chloride to precipitate calcium sulfate dihydrate, which is recovered. The calcium sulfate dihydrate obtained in this way is used in the construction industry or discarded. EP 0 366 182 B1 describes a process for removing an industrial residue containing sodium sulfate.

Preferably, in step a) the sodium sulfate comprises:
- at least 70 wt% sodium sulfate,
- from 0.01 to 30 wt% insoluble matter,
- from 0.01 to 30 wt% sodium carbonate and/or sodium bicarbonate,
- from 0.01 to 30 wt% sodium chloride,
expressed on the total weight of the sodium sulfate.

More preferably, in step a) the sodium sulfate comprises:
- at least 90 wt% sodium sulfate,
- from 0.01 to 9 wt% insoluble matter,
- from 0.01 to 9 wt% sodium carbonate and/or sodium bicarbonate,
- from 0.01 to 9 wt% sodium chloride,
expressed on the total weight of the sodium sulfate.

Sodium chloride can be obtained by several processes, for instance rock salt mining, solution mining, or solar salt production. In rock salt mining, sodium chloride is extracted from underground salt deposits using mechanical methods. In solar salt production, naturally occurring salt water, e.g. from the sea or saline lakes, is moved through a series of shallow, interlocking ponds, that allow evaporation of water to create brine solutions until the most saturated brines evaporate to form salt crystals. In solution mining, freshwater is injected into an underground salt deposit where it dissolves the salt into a saturated brine. This brine is then pumped back to the surface where it is boiled and evaporated to create salt crystals.

However, due to the high solubility of sodium chloride in water (around 360 g/L at 25°C), not only freshwater but also an aqueous sodium chloride solution can be used for extraction of sodium chloride from the salt mine.

The invention relates, consequently, to a process for removing sodium sulfate, preferably an industrial residue containing sodium sulfate, according to which the sodium sulfate is treated, mixed or contacted with a calcium salt to precipitate calcium sulfate, the calcium sulfate is preferably recovered or can be optionally sent to a rock salt deposit, and an aqueous solution of sodium chloride can be reused.

Preferably, in the inventive process in step d) 20 to 60 wt.%, preferably 35 to 55 wt.% of the liquid containing sodium chloride from step c) is used.

This makes it possible to remove the industrial residues containing sodium sulfate easily and economically, without making it necessary to tie up a waste bed, and which results, furthermore, in obtaining an industrial product which can be reclaimed. Furthermore it reduces the volume of needed water to feed the process and dissolve sodium sulfate, and increases the yield of precipitating sodium within the manufacture of sodium carbonate and/or sodium bicarbonate.

The reminder of the liquid containing sodium chloride of step c) is advantageously fed to a salt mine for extracting sodium chloride from the salt mine. This enables to saturate or to near-saturate the liquid containing sodium chloride. This is useful to recycle back or valorize the liquid containing sodium chloride for producing sodium carbonate or sodium bicarbonate. Alternatively in another advantageous embodiment, the liquid containing sodium chloride is saturated or near-saturated with solid rock-salt or with solid sodium chloride. This is useful to recycle back or valorize the liquid containing sodium chloride for producing sodium carbonate or sodium bicarbonate.

In the process according to the invention, the calcium must be chosen from those which are capable of decomposing sodium sulfate to form calcium sulfate. Therefore, calcium chloride is used in step a).

Preferably, in the inventive process in step a) the calcium chloride and at least 5 wt.% of the sodium chloride of the total amount of the sodium chloride used at step a), is an effluent from a process to manufacture sodium carbonate and/or sodium bicarbonate from calcium carbonate and sodium chloride. More preferably, in the inventive process in step a) the calcium chloride and at least 35 wt.-%, more preferably at least 50 wt.% of the sodium chloride of the total amount of the sodium chloride used in step a), is an effluent from a process to manufacture sodium carbonate or sodium bicarbonate from calcium carbonate and sodium chloride.

Preferably, the effluent containing calcium chloride and sodium chloride obtained during sodium carbonate and/or sodium bicarbonate production by the ammonia process, is first used to generate calcium sulfate by reaction with sodium sulfate.

In general, the following reaction is performed:

CaCl₂ + NaCl + Na₂SO₄ → CaSO₄ + 3 NaCl

Preferably, in this process, calcium sulfate precipitates as a solid and the remaining liquid contains dissolved sodium chloride.

Preferably, in the inventive process the sodium carbonate and/or the sodium bicarbonate is (are) produced by the ammonia process or by an electrochemical process.

The ammonia soda process is the predominant process used for the production of sodium carbonate. It is described above in detail (see e.g. Ullmann's Encyclopedia of Industrial Chemistry, 2012, Wiley-VCH, Vol. 33, Sodium Carbonates, pages 299-317).

In a preferred embodiment of the process according to the invention, the calcium salt is calcium chloride originating from the calcium hydroxide treatment of the sodium bicarbonate mother liquor in the ammonia-soda process. In this embodiment of the process according to the invention, the treatment of sodium sulfate with calcium chloride may be carried out by mixing with sodium sulfate a residual liquor from a column for distilling the mother liquor from the manufacture of sodium bicarbonate by the ammonia process. Examples of constitution of these residues, in the form of dilute aqueous suspensions, are given in the treatise by Te-Pang Hou "Manufacture of Soda", second edition, Hafner Publishing Company, 1969, page 237, as well as in the publication "The Rehabilitation of the Solvay Process Waste Beds" by Frederick W. Boecker, B.S.C.E., Syracuse University, 1968, page 20. This embodiment of the process according to the invention has the advantage of employing only industrial residues, which may be removed together into the rock salt deposit. It involves using a quantity of water which is capable of dissolving, in the deposit, a volume of rock salt which is at least equal to the total volume of the calcium sulfate and of the insoluble matter in the residual liquor from the soda unit. Alternatively, the residual liquor can be subjected to a filtration or a settling operation in order to remove from it beforehand the insoluble matter which it contains.

Preferably, in the inventive process the effluent for step (a) comprises sodium chloride in an amount of 1 to 300 g/L, preferably 15 to 150 g/L, more preferably 20 to 60 g/L and comprises calcium chloride in an amount of 30 to 360 g/L, preferably 50-200g/L, more preferably 70-150 g/L.

Preferably, the sodium chloride and/or the calcium chloride is dissolved in a protic solvent, in particular in water. Then the amount of sodium chloride ranges preferably from 1 to 300 g/L in water, preferably 15 to 150 g/L, more preferably 20 to 60 g/L and from calcium chloride ranges from of 30 to 360 g/L in water, preferably 50-200 g/L, more preferably 80-150 g/L.

Preferably, in the inventive process in step (a), the sodium chloride recycled from step (c) is introduced as an aqueous solution of sodium chloride comprising sodium chloride in an amount of 50 to 350 g/L, preferably 100 to 200 g/L, more preferably 110 to 180 g/L.

Preferably, in the inventive process in step (a), the calcium chloride is introduced as an aqueous solution of calcium chloride comprising calcium chloride in an amount of 30 to 360 g/L, preferably 50 to 200 g/L, more preferably 70 to 150 g/L.

Preferably, in the inventive process the sodium sulfate in step (a) is entered into the process as an aqueous sodium sulfate solution, wherein the aqueous sodium sulfate solution contains sodium chloride in an amount of 50 to 350 g/L, preferably 100 to 300 g/L, more preferably 120 to 250 g/L.

In chemical engineering, processes are often categorized based on how materials are fed into the system and how products are obtained. Most common are the batch, semi-batch, and continuous processes:
Batch Process:
   ∘ In a batch process, a finite quantity of material (known as a batch) is processed at a time.
   ∘ The entire process, from feeding raw materials to obtaining the final product, occurs within a single vessel or set of vessels.
   ∘ Once the batch is processed, the equipment is emptied, cleaned, and prepared for the next batch.
   ∘ Batch processes are commonly used when the production volume is relatively low, when the product requires individualized processing, or when the process conditions need to be changed frequently.
Semi-Batch Process:
   ∘ A semi-batch process combines features of both batch and continuous processes.
   ∘ In a semi-batch process, one or more of the reactants are continuously fed into the system while other reactants may be added in batches.
   ∘ This allows for greater control over the reaction rate and product formation compared to batch processes.
   ∘ Semi-batch processes are used when precise control over reaction conditions or product composition is required.
Continuous Process:
   ∘ In a continuous process, raw materials are continuously fed into the system, and products are continuously removed.
   ∘ The process operates without interruption, and there is a steady flow of materials through the system.
   ∘ Continuous processes are often used in industries where high production rates are required and where consistent product quality is important.
   ∘ Examples include petrochemical refineries, power plants, and food processing facilities.

Preferably, in the inventive process is a continuous, batch or semi batch-process, in which the steps (a) to (d) are repeated. Most preferred is an inventive process that is a continuous process, in which the steps (a) to (d) are repeated

Preferably, in the inventive continuous process the steps (a) to (d) are repeated,
and wherein in step a) the sodium chloride comprises
i) 0.1 to 50 wt.% of sodium chloride originated as an effluent from a process to manufacture sodium carbonate and/or bicarbonate from calcium carbonate and sodium chloride,
ii) 50 to 99.9 wt.% of sodium chloride from step c), wherein the total amount for sodium chloride in i) and in ii) is 100 wt.%.

Preferably, in the inventive process the aqueous sodium sulfate solution comprises sodium sulfate in an amount of 50 to 350 g/L, preferably 100 to 300 g/L, more preferably 120 to 250 g/L.

Preferably, in the inventive process the calcium sulfate generated in step (b) is selected from the group consisting of the anhydrite form, CaSO₄; the dihydrate form (gypsum), CaSO₄·2H₂O; and the hemihydrate form, CaSO₄·½H₂O; and combinations thereof.

Preferably, in the inventive process, in step a), sodium sulfate is used either as anhydrous sodium sulfate or decahydrate sodium sulfate. Preferably, the sodium sulfate used as starting material in step a) comprises at least one salt impurity, which salt impurity is selected from the list of:
- a soluble salt impurity
   preferably, a soluble salt comprising lithium, or sodium, or potassium, or magnesium, or calcium, or strontium, or barium, or borate, or nitrate, or nitrite, or phosphate, or silicate, or fluoride, or bromide, or iodide, or selenium, or tellurium, or a mixture of two or more than 2 soluble salts thereof;
- an organic salt
   preferably, an organic salt comprising organic carbon; or
- a soluble metal salt
   preferably, wherein the metal salt comprises at least one of the following chemical elements : arsenic (As), barium (Ba), beryllium (Be), bismuth (Bi), cadmium (Cd), copper (Cu), chromium (Cr), iron (Fe), lead (Pb), manganese (Mn) mercury (Hg), molybdenum (Mo), nickel (Ni), niobium (Nb), silver (Ag), thallium (Tl), tin (Sn), tantalum (Ta), titanium (Ti), tungsten (W), uranium (U), plutonium (Pu), vanadium (V), zinc (Zn), or zirconium (Zr) );
- or a mixture thereof;
and wherein the salt impurity:
- is at least partially removed before adding the effluent containing calcium chloride and sodium chloride,
- or is at least partially removed by precipitation or by absorption with the calcium sulfate,
- or is at least partially removed in step b),
- or is at least partially removed before being used as starting material in the process of step b).

Preferably, in the inventive process the sodium sulfate used in step (a) originates from industrial waste.

Preferably, in the inventive process in step a) the temperature is adjusted for crystallizing calcium sulfate, preferably between 20°C and 50°C at standard conditions.

Preferably, in the inventive process in step d) 20 to 60 wt.% of the liquid containing sodium chloride from step c) is used, and wherein the process is a continuous, batch or semi batch process in which the steps (a) to (d) are repeated, and wherein in step a) the sodium chloride comprises
i) 0.1 to 50 wt.% of sodium chloride originated as an effluent from a process to manufacture sodium carbonate and/or sodium bicarbonate from calcium carbonate and sodium chloride,
ii) 50 to 99.9 wt.% of sodium chloride from step c).

In a further embodiment, the invention refers to the use of sodium sulfate either as anhydrous sodium sulfate or decahydrate sodium sulfate, preferably in the inventive process.

### FIGURES

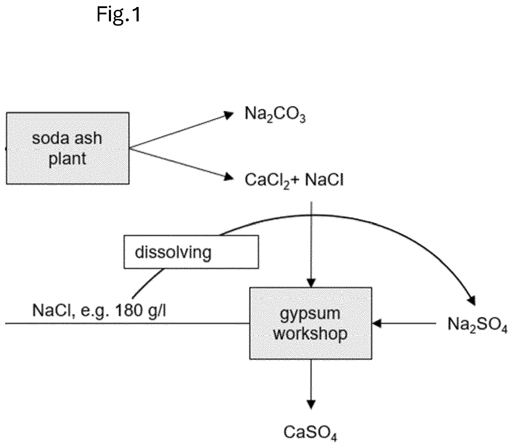

- Fig. 1: shows the process to manufacture calcium sulfate. In the "gypsum workshop" a solution containing calcium chloride and sodium chloride with sodium sulfate is reacted to obtain calcium sulfate. The calcium chloride and at least 5.-% of the sodium chloride of the total amount of the sodium chloride is an effluent from a process to manufacture sodium carbonate from calcium carbonate and sodium chloride (ammonia process). Both starting materials come from the soda ash plant. In the "gypsum workshop" the calcium sulfate is precipitated and separated and a liquid containing the sodium chloride is generated. After separating the liquid containing the sodium chloride from the calcium sulfate; the liquid is used to dissolve the sodium sulfate before it is entered in in the gypsum workshop.

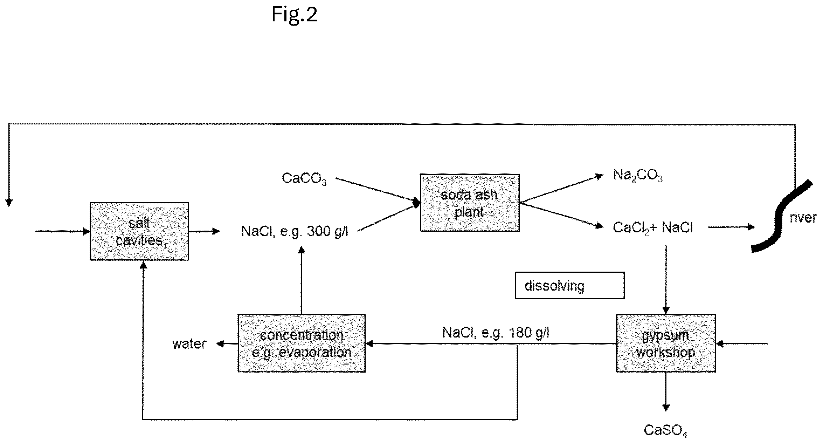

- Fig. 2: shows the process to manufacture calcium sulfate according to the present invention. This inventive process is embedded in an ammonia process. The aqueous sodium chloride solution is at least partly withdrawn from the deposit is sent back to the soda unit.

## Claims

1. Process to manufacture calcium sulfate comprising at least the following steps:
a) reacting a solution containing calcium chloride and sodium chloride with sodium sulfate and obtaining calcium sulfate,
b) precipitating and separating of the calcium sulfate obtained in step a) and generating a liquid containing the sodium chloride,
c) separating the liquid containing the sodium chloride from step b), and
d) using at least partly the liquid containing sodium chloride from step c) to dissolve the sodium sulfate before it is entered in the step a).

2. Process according to claim 1, wherein in step d) 20 to 60 wt.% of the liquid containing sodium chloride from step c) is used.

3. Process according to claim 1 or 2, wherein in step a) the calcium chloride and at least 5 wt.% of the sodium chloride of the total amount of the sodium chloride is an effluent from a process to manufacture sodium carbonate and/or sodium bicarbonate from calcium carbonate and sodium chloride.

4. Process according to claim 3, wherein the sodium carbonate and/or the sodium bicarbonate is (are) produced by the ammonia process, or by an electrochemical process.

5. The process according to claims 3 and 4, wherein the effluent for step (a) comprises sodium chloride in an amount of 1 to 300 g/L, and comprises calcium chloride in an amount of 30 to 360 g/L.

6. The process according to any of claims 1 to 5, wherein in step (a), the sodium chloride recycled from step (c) is introduced as an aqueous solution of sodium chloride comprising sodium chloride in an amount of 50 to 350 g/L.

7. The process according to any of claims 1 to 6, wherein in step (a), the calcium chloride is introduced as an aqueous solution of calcium chloride comprising calcium chloride in an amount of 30 to 360 g/L.

8. The process according to any of claims 1 to 7, wherein the sodium sulfate in step (a) is entered into the process as an aqueous sodium sulfate solution, wherein the aqueous sodium sulfate solution contains sodium chloride in an amount of 50 to 350 g/L.

9. The process according to any of the claims 1 to 8, wherein the process is a continuous, batch or semi batch process in which the steps (a) to (d) are repeated.

10. The process according to any of the claims 1 to 9, wherein the process is a continuous process in which the steps (a) to (d) are repeated, and wherein in step a) the sodium chloride comprises
i) 0.1 to 50 wt.% of sodium chloride originated as an effluent from a process to manufacture sodium carbonate and/or sodium bicarbonate from calcium carbonate and sodium chloride,
ii) 50 to 99.9 wt.% of sodium chloride from step c).

11. The process according to claim 10, wherein the aqueous sodium sulfate solution comprises sodium sulfate in an amount of 50 to 350 g/L.

12. The process according to any of claims 1 to 11, wherein the calcium sulfate generated in step (b) is selected from the group consisting of the anhydrite form, CaSO₄; the dihydrate form (gypsum), CaSO₄·2H₂O; and the hemihydrate form, CaSO₄·½H₂O; and combinations thereof.

13. The process according to any of claims 1 to 12, wherein the sodium sulfate used in step (a) originates from industrial waste.

14. The process according to any of claims 1 to 13, wherein in step a) the temperature is adjusted for crystallizing calcium sulfate, preferably between 20°C and 50°C, at standard conditions.

15. Process according to any of the claims 1 to 14, wherein in step d) 20 to 60 wt.% of the liquid containing sodium chloride from step c) is used, and wherein the process is a continuous, batch or semi batch process in which the steps (a) to (d) are repeated, and wherein in step a) the sodium chloride comprises
i) 0.1 to 50 wt.% of sodium chloride originated as an effluent from a process to manufacture sodium carbonate and/or sodium bicarbonate from calcium carbonate and sodium chloride,
ii) 50 to 99.9 wt.% of sodium chloride from step c).
